# FASCICULE DE BREVET EUROPEEN

(11) **EP 2 697 011 B1**
(45) Date de publication et mention de la délivrance du brevet: **18.02.2015**
(21) Numéro de dépôt: 12712333.9
(22) Date de dépôt: 07.03.2012
(51) Int. Cl.: B22F 1/00, B22F 3/10, B22F 3/22, C04B 35/64, C08K 13/02, C22C 33/02

(54) **PROCEDE DE FABRICATION DE COMPOSANTS EN CERAMIQUE OU METAL PAR PIM, BASE SUR L'UTILISATION DE FIBRES OU NANOFIBRES INORGANIQUES**
VERFAHREN ZUR HERSTELLUNG VON KERAMISCHEN ODER METALLISCHEN BAUTEILEN MITTELS PULVERSPRITZGIESSEN UNTER VERWENDUNGANORGANISCHEN FASERN ODER NANOFASERN
METHOD FOR PRODUCING CERAMIC OR METAL COMPONENTS BY MEANS OF POWDER INJECTION MOULDING, BASED ON THE USE OF INORGANIC FIBRES OR NANOFIBRES

(30) Priorité: 13.04.2011 FR 1153208
(43) Date de publication de la demande: 19.02.2014
(73) Titulaire: Commissariat à l'Énergie Atomique et aux Énergies Alternatives, 75015 Paris (FR)
(72) Inventeur: FEDERZONI, Luc, F-38300 Bourgoin Jallieu (FR); REVIRAND, Pascal, F-38120 Saint-Egreve (FR)
(74) Mandataire: Cabinet Laurent & Charras
(86) Numéro de dépôt international: PCT/FR2012/050464
(87) Numéro de publication internationale: WO 2012/140341

(56) Documents cités:
- EP-A1- 1 972 419
- WO-A1-2008/003877
- NYBERG E ET AL: "Microstructure and mechanical properties of titanium components fabricated by a new powder injection molding technique", MATERIALS SCIENCE AND ENGINEERING C, ELSEVIER SCIENCE S.A, CH, vol. 25, no. 3, 1 mai 2005 (2005-05-01), pages 336-342, XP025316596, ISSN: 0928-4931, DOI: DOI:10.1016/J.MSEC.2005.04.006 [extrait le 2005-05-01] cité dans la demande
- YE ET AL: "Fabrication of metal matrix composites by metal injection molding-A review", JOURNAL OF MATERIALS PROCESSING TECHNOLOGY, ELSEVIER, NL, vol. 200, no. 1-3, 6 novembre 2007 (2007-11-06), pages 12-24, XP022510603, ISSN: 0924-0136, DOI: DOI:10.1016/J.JMATPROTEC.2007.10.066 cité dans la demande
- KARATAS C ET AL: "Rheological properties of feedstocks prepared with steatite powder and polyethylene-based thermoplastic binders", JOURNAL OF MATERIALS PROCESSING TECHNOLOGY, ELSEVIER, NL, vol. 152, no. 1, 1 octobre 2004 (2004-10-01), pages 77-83, XP004543741, ISSN: 0924-0136, DOI: DOI:10.1016/J.JMATPROTEC.2004.03.009
- R. RUPRECHT ET AL: "Injection molding of microstructured components from plastics, metals and ceramics", MICROSYSTEM TECHNOLOGIES, vol. 8, no. 4-5, 1 août 2002 (2002-08-01), pages 351-358, XP055002280, ISSN: 0946-7076, DOI: 10.1007/s00542-001-0153-7
- L. MERZ ET AL: "Feedstock development for micro powder injection molding", MICROSYSTEM TECHNOLOGIES, vol. 8, no. 2-3, 1 mai 2002 (2002-05-01), pages 129-132, XP055003048, ISSN: 0946-7076, DOI: 10.1007/s00542-002-0166-x
- PIOTTER V ET AL: "MICRO POWDER-INJECTION MOULDING OF METALS AND CERAMICS", SADHANA, INDIAN ACADEMY OF SCIENCES, BANGALORE, IN, vol. 28, no. PART 01/02, 1 février 2003 (2003-02-01), pages 299-306, XP001248305, ISSN: 0256-2499

## Description

### DOMAINE TECHNIQUE

La présente invention a trait à un procédé de fabrication de pièces, notamment de grosse taille, par des techniques de moulage par injection ou PIM (selon l'expression anglo-saxonne « *Powder Injection Molding* »), utilisant des mélanges-maîtres également dénommés selon l'expression anglo-saxonne *«feedstocks*», dits « hybrides » contenant des fibres ou nanofibres inorganiques courtes ou longues.

Plus précisément, ces fibres ou nanofibres inorganiques peuvent être en carbone, en métal ou en céramique. Elles sont ajoutées lors du procédé PIM et disparaissent à la fin du procédé, soit par dissociation pour former un alliage (dans le cas d'une fibre de matériau différent de la pièce) ou par dissolution dans la matière (dans le cas d'une fibre de même matériau que la pièce).

Les composants fabriqués à l'aide d'un procédé selon l'invention offrent des propriétés remarquables à toutes les étapes de fabrication. En effet :
- les pièces injectées présentent une tenue mécanique améliorée ;
- les pièces déliantées ont une tenue mécanique améliorée ;
- les pièces frittées offrent des propriétés fonctionnelles inégalées, notamment meilleure densité, conductivité thermique, et propriétés mécaniques.

### ETAT ANTERIEUR DE LA TECHNIQUE

Il est connu d'utiliser des fibres ou nanofibres en tant qu'additifs en plasturgie (industrie de la transformation des polymères), dans de nombreuses applications industrielles telles que l'automobile, l'aéronautique et le médical. Les matériaux résultants, constitués de fibres noyées dans une matrice polymérique, sont appelés composites à matrice polymère.

Les propriétés de tels matériaux, qui découlent de l'ajout des fibres, sont le plus généralement les suivantes:
- renforcement mécanique ;
- absorption des chocs ;
- modules élastiques élevés ;
- retardant au feu.

Dans ce cadre et le plus généralement, la fibre ajoutée est une fibre de verre, de polyaramide (Kevlar^{®}), de carbone ou d'aramide.

Par ailleurs, le procédé PIM est couramment utilisé pour fabriquer des petits composants en métal ou en céramique. En général, les pièces sont plutôt petites (volume de quelques cm³) et de forme complexe, car c'est un procédé de réplication.

En pratique, le PIM est un procédé qui présente toutefois un certain nombre d'inconvénients, apparaissant aujourd'hui comme indissociables de cette technologie. Les défauts récurrents sont les suivants:
- les pièces sont non denses après frittage (quelques porosités résiduelles de l'ordre de 1 à 10%), ce qui induit des propriétés fonctionnelles dégradées : faible conductivité thermique, faibles propriétés mécaniques, faible résistance à la fatigue..., comme décrit dans le document « Microstructure and mechanical properties of titanium components fabricated by a new powder injection molding technique » (Eric Nyberg, Megan Miller, Kevin Simmons and K. Scott Weila, Materials Science and Engineering C 25 (2005) 336 - 342 ; XP25316596).
- les pièces sont très fragiles à vert, c'est-à-dire brutes d'injection, et lorsqu'elles sont déliantées.

La fragilité des pièces PIM est un sujet récurrent, qui a fait l'objet de nombreuses publications récentes, telles que le document EP 1 972 419. Ces problèmes demeurent toutefois sans réelle solution technique à ce jour.

Dans ce domaine technique, l'utilisation de fibres ou nanofibres dans les « feedstocks », en vue de réaliser des composites à matrice métallique (CMM), a certes déjà été évoquée par le passé. La fibre ne sert alors qu'à renforcer le produit final, comme c'est le cas dans le CMM. Ainsi et dans tous les cas, les fibres n'ont aucun intérêt quant aux étapes intermédiaires, à l'étape de déliantage notamment, et ne servent qu'à donner des propriétés particulières, mécaniques généralement, au composant final qui est donc constitué de fibres noyées dans la matrice.

Un état de l'art très complet en rapport avec la technique MIM (pour l'expression anglo-saxonne « *Metal Injection Molding* ») est indiqué dans l'article suivant: Hezhou Ye, Xing Yang Liu, Hanpring Hong, Journal of Materials processing Technology 200 (2008) 12-24 (XP22510603).

Il existe donc un besoin évident de développer de nouvelles solutions techniques permettant d'éviter les écueils mentionnés ci-dessus en rapport avec la technologie PIM, et ce aux différentes étapes du procédé, notamment au moment du déliantage.

### OBJET DE L'INVENTION

La présente invention propose une nouvelle génération de feedstock, basée sur l'utilisation de fibres ou de nanofibres comme additifs dans le feedstock.

L'utilisation de ces fibres ou nanofibres apporte les avantages techniques suivants:
- au cours du procédé de fabrication : la tenue mécanique des pièces à vert (bruts d'injection) et déliantées est nettement améliorée ;
- sur les produits qui peuvent être fabriqués : il est possible de fabriquer des composants de taille importante et de dépasser les 100 cm³ de volume. En outre, les produits fabriqués présentent des propriétés physiques remarquables (conductivité thermique, électriques, mécaniques,....).

De manière caractéristique selon l'invention et contrairement à l'art antérieur, les fibres incorporées dans le feedstock ne sont pas retrouvées sous cette forme dans le produit final. Ainsi, la fibre n'est pas insérée dans le but de réaliser un matériau composite.

Au contraire et selon l'invention, la fibre n'est incorporée dans le feedstock que pour apporter une fonction éphémère afin d'améliorer le procédé PIM. Ainsi, la fibre en tant que telle disparaît du produit final, par diffusion lors du frittage.

Néanmoins, la matière constituant la fibre demeure et est incorporée à la pièce finale.

Plus précisément, la présente invention concerne un mélange-maître destiné à être mis en oeuvre dans la technique de moulage par injection PIM, qui comprend :
- au moins une poudre inorganique, avantageusement métallique ou céramique ;
- un liant polymérique;
- des fibres ou nanofibres inorganiques, avantageusement céramiques ou métalliques.

De manière connue, le feedstock comprend donc au moins une poudre inorganique et un liant polymérique.

La poudre inorganique selon l'invention peut être une poudre constituée d'un matériau unique, de plusieurs matériaux ou un mélange de poudres. De manière avantageuse, il s'agit d'une poudre en métal ou en céramique. Il peut par exemple s'agir d'une poudre d'alumine, de fer (Fe) ou de nickel (Ni). Dans le cas où la pièce finale est constituée d'un alliage Fe-Ni, il est possible d'utiliser un mélange de poudres de Fe et de Ni, respectivement, ou une poudre unique déjà constituée de cet alliage.

La poudre est généralement micronique mais l'utilisation de poudre(s) nanométrique(s) est envisageable.

A noter que la poudre peut être traitée à l'aide d'un surfactant, comme par exemple l'acide stéarique. Ceci permet d'abaisser ou d'éliminer le taux de surfactant nécessaire dans le liant polymérique.

De manière classique, le feedstock selon l'invention comprend également un liant de nature polymérique, destiné à être éliminé lors de l'étape de déliantage. Avantageusement, celui-ci comprend un ou plusieurs polymères d'addition assurant les fonctions de plastifiant, de lubrifiant et/ou de surfactant. Il s'agit avantageusement d'un mélange de polymères qui sont éliminés par étape lors de l'étape de déliantage. Il peut par exemple s'agir d'un mélange de polyéthylène glycol (PEG), jouant le rôle de fluidifiant (faciliteur d'injection), et de polyéthylène (PE), jouant le rôle de plastifiant. Ce dernier représente avantageusement environ 20% en volume du PEG, voire moins. Comme il sera vu ci-dessous, ce taux faible en plastifiant est rendu possible grâce à la présence de fibres ou nanofibres dans le mélange-maître.

Dans le cas particulier d'un mélange PEG + PE comme liant polymérique, le PEG pourra être éliminé dans un premier temps à l'aide d'un déliantage chimique réalisé en présence d'eau, ou par déliantage à l'aide d'un fluide supercritique tel que le CO₂, aboutissant à la dissolution du PEG. Dans un second temps, le PE peut être éliminé par un déliantage thermique à une température n'affectant pas les fibres inorganiques présentes dans le feedstock. Ce déliantage thermique se déroule typiquement à environ 400°C, sous air dans le cas de poudres de céramique et sous gaz neutre dans le cas de poudres métalliques potentiellement oxydables sous air à cette température.

En outre et pour pourvoir être délianté sélectivement par rapport au PE, le PEG est de préférence de bas poids moléculaire et à chaine courte (typiquement inférieur à 1500 g.mol-1). Durant le déliantage par fluide supercritique, par exemple au moyen de CO₂ supercritique, le PEG est éliminé alors que le PE est conservé et sera délianté lors de l'étape de pré-traitement thermique.

De manière caractéristique selon l'invention, le mélange-maître comprend en outre des fibres, avantageusement de diamètre micronique, ou des nanofibres de diamètre nanométrique. Il peut s'agir de fibres courtes ou longues avec des dimensions allant de 10 microns à 10 millimètres.

A noter que les fibres ou nanofibres peuvent également être traitées à l'aide d'un surfactant, comme par exemple l'acide stéarique. Ceci permet d'abaisser le taux de surfactant nécessaire dans le liant polymérique.

Comme déjà dit, ces fibres ou nanofibres sont de nature inorganique. Elles sont avantageusement en céramique ou en métal.

Il existe plusieurs cas de figures concernant la nature relative des fibres ou nanofibres par rapport à la poudre inorganique présente dans le feedstock.

Avantageusement, lorsqu'il s'agit d'une ou de poudres métalliques, les fibres ou nanofibres sont métalliques et lorsqu'il s'agit d'une ou de poudres céramiques, les fibres ou nanofibres sont en céramique.

De manière encore plus avantageuse, les fibres ou nanofibres sont réalisées à l'aide d'un matériau entrant dans la composition d'au moins la poudre inorganique.

Selon un premier mode de réalisation, la poudre et les fibres ou nanofibres sont réalisées à l'aide du même matériau. Ceci vise en particulier une poudre céramique, et dans ce cas la fibre ou nanofibre est constituée de préférence de la même céramique que la poudre.

Par exemple, la céramique est de l'alumine. Dans ce cas particulier, les fibres ont avantageusement un diamètre compris entre 1 et 10 microns, et une longueur de 1 à 10 millimètres.

Ainsi, dans ce cas de figure, les fibres ont pour fonction de renforcer les pièces à vert (après injection) et brune (après déliantage), et surtout d'assurer une densité importante sur la pièce finale. De la même manière, l'orientation des fibres provoquée lors de l'étape d'extrusion/injection permet d'exacerber les propriétés d'anisotropie suivant une ou deux directions préférentielles.

Alternativement, le mélange-maître comprend un mélange de poudres et les fibres ou nanofibres inorganiques sont réalisées à l'aide du même matériau que celui constitutif de l'une des poudres du mélange.

C'est en particulier le cas pour une poudre totalement métallique (ne contenant pas d'oxyde de ces métaux mais pouvant être composée d'un mélange de métaux natifs ou d'un alliage de métaux). La fibre ou nanofibre est alors préférentiellement constituée du même métal qu'au moins un des constituants de la poudre.

A titre d'exemple, la poudre métallique peut être constituée d'un mélange de poudres (Ni + Fe) ou d'un alliage de métaux (Fe-Ni). Les fibres sont alors avantageusement réalisées à l'aide d'un des métaux du mélange ou de l'alliage, à savoir Ni ou Fe.

Dans ce cas de figure, la composition relative du produit final par rapport au mélange de poudres initial est modifiée, puisqu'elle est enrichie en matériau constitutif des fibres ou nanofibres.

Dans ce cadre, la fibre inorganique remplit donc, outre les fonctions assurées par les fibres polymères (à savoir assurer une tenue mécanique améliorée des pièces à vert et à brun), une fonction de réservoir «métallurgique». La fibre peut servir de source d'éléments chimiques nécessaires à la réalisation de l'alliage désiré. Ainsi et à titre d'exemple, en insérant des fibres de cuivre dans la formulation d'un feedstock pour la fabrication de composants en WCu, la fibre assure un réservoir de cuivre qui peut diffuser lors de l'étape de frittage et ainsi doper l'alliage constitué des poudres seules.

Selon un autre aspect, l'invention concerne un procédé de fabrication d'un mélange-maître tel que défini ci-dessus, qui comprend les étapes suivantes :
- préparation du liant polymérique par incorporation et mélange du ou des polymères constitutifs du liant ;
- incorporation des fibres ou nanofibres inorganiques ;
- incorporation de la ou des poudres inorganiques.

Les deux dernières étapes peuvent être inversées, à savoir la ou les poudres inorganiques peuvent être incorporées avant les fibres ou nanofibres inorganiques.

La préparation du liant polymérique se fait avantageusement dans un malaxeur et sous chauffage. L'incorporation des poudres et des fibres se fait également de manière privilégiée dans le malaxeur pour en assurer le mélange homogène.

Les poudres et les fibres ou nanofibres sont ajoutées en quantité adaptée jusqu'à la valeur de charge désirée (taux de charge volumique), pouvant représenter de 50 % à 80 % du volume total du mélange-maître, ce qui constitue un taux élevé par rapport à l'art antérieur.

La proportion relative des poudres et des fibres ou nanofibres est ajustée en fonction notamment de la composition et des propriétés recherchées pour le produit final.

Selon un autre aspect, l'invention vise également un procédé de fabrication de pièces par la technique de moulage par injection (PIM), qui comprend les étapes suivantes :
- préparation d'un mélange-maître tel que défini ci-dessus ;
- injection du mélange-maître dans le moule ;
- déliantage, avantageusement chimique, thermique et/ou à l'aide d'un fluide supercritique tel que le CO₂ supercritique ;
- frittage dans des conditions permettant la déstructuration des fibres ou nanofibres.

La préparation du mélange-maître est avantageusement réalisée comme décrit ci-dessus.

Selon un mode de réalisation privilégié, le feedstock ainsi préparé est refroidi puis granulé, avantageusement à l'aide d'un granulateur. Il est alors utilisé comme matière première pour l'injection. L'injection dans un moule adapté se déroule de manière classique, avantageusement sous pression. Typiquement, le granulé est chauffé dans la vis d'injection puis injecté en matrice.

De manière avantageuse et comme déjà mentionné, les fibres ou nanofibres sont orientées au cours de l'étape d'injection. Ainsi, l'orientation des fibres permet d'assurer une certaine (faible mais néanmoins possible en cas de porosité résiduelle) anisotropie pouvant être intéressante sur le produit final (conductivité thermique importante par exemple).

Classiquement, l'étape de déliantage est destinée à éliminer le liant polymérique. Il s'agit avantageusement de déliantage chimique ou de déliantage thermique, généralement une combinaison des deux techniques, appliquées successivement. Avantageusement, les conditions de déliantage ne détériorent pas les fibres ou les nanofibres présentes.

Comme déjà dit, dans le cas particulier d'un liant polymérique constitué de PEG + PE, le PEG pourra être éliminé dans un premier temps à l'aide d'un déliantage chimique réalisé en présence d'eau, aboutissant à la dissolution du PEG.

Alternativement au déliantage chimique, un déliantage par fluide supercritique, avantageusement par CO₂ supercritique, peut-être réalisé. Dans un second temps, le PE peut être éliminé par un déliantage thermique à une température n'affectant pas les fibres inorganiques présentes dans le feedstock.

L'étape suivante est le frittage, étape au cours de laquelle la structure de la fibre ou de la nanofibre disparaît. Ainsi et de manière avantageuse, le frittage est réalisé à une température de l'ordre de 0,7 x Tf (Tf : température de fusion) du matériau à fritter, en l'occurrence du matériau constitutif des fibres ou nanofibres. La durée du frittage est normalement d'au moins 1 heure.

A noter que de manière importante, l'utilisation de fibres très fines ou de nanofibres est privilégiée car elle permet de limiter les distances de diffusion et ainsi, assure la « consommation » complète des fibres. Par cette consommation complète, la fibre disparaît totalement après frittage.

Le procédé selon l'invention permet d'obtenir des pièces aux propriétés uniques, notamment :
- de taille importante, avantageusement d'un volume supérieur à 100 cm³, voire supérieur à 1 litre ;
- de composition modulable ;
- de densité améliorée ;
- de conductivité thermique améliorée ;
- de propriétés mécaniques améliorées ;
- de propriétés anisotropes.

Les avantages de la présente invention ressortiront mieux des exemples de réalisation qui suivent.

### LEGENDES DES FIGURES

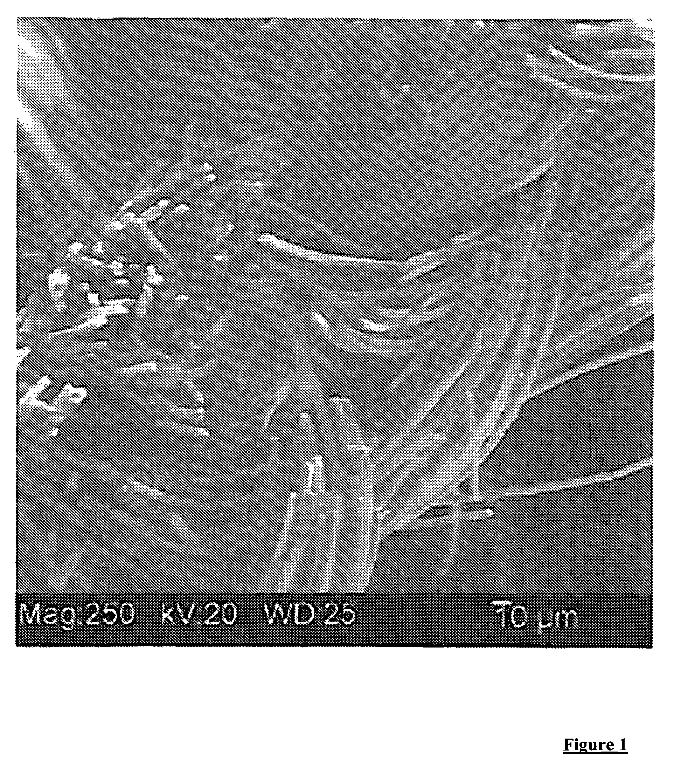

La figure 1 est une vue en microscopie électronique à balayage des fibres d'alumine surfactée par l'acide stéarique ALK15 (ZIRCAR).

### EXEMPLES DE REALISATION

Les exemples de réalisation qui suivent, à l'appui de la figure annexée, ont pour but d'illustrer l'invention mais ne sont en aucun cas limitatifs.

### 1/ Exemple 1 : Réalisation d'un composant en alumine pure par la réalisation d'un feedstock à fort taux de charge

### 1-1. Réalisation d'un feedstock à base de Polyéthylène Glycol (PEG) + Polyéthylène (PE) + fibres d'alumine + alumine:

Les granulées de polymères PEG et PE sont chauffés et mélangés dans un malaxeur. La proportion volumique de PE, qui joue le rôle de plastifiant, est de l'ordre de 20% du PEG. Cette quantité en PE est très faible puisqu'une partie de sa fonction est assurée par la fibre d'alumine.

La poudre micronique d'alumine surfactée est incorporée progressivement dans le malaxeur jusqu'à un taux de charge volumique de 40% du volume total du feedstock.

Ensuite, la fibre d'alumine, elle-même surfactée par de l'acide stéarique (AS), est incorporée en complément de la poudre, jusqu'à un taux de charge total de 55% (55% du volume total du feedstock). Les fibres d'alumine ont un diamètre de 1 à 10 microns (µm) et une longueur de 1 à 10 mm. Des fibres d'alumine, adaptées au procédé selon l'invention, sont par exemple les fibres ALK15 commercialisées par la société Zircar, dont une vue en microscopie électronique à balayage est montré à la figure 1.

Dans cette formulation, les populations en présence dans le feedstock sont donc les suivantes (proportion volumique) :
- PEG : 35%
- PE : 7%
- AS : 3%
- alumine poudre : 40%
- alumine fibre : 15%

Le mélange est ensuite refroidi puis granulé.

### 1-2. Injection et déliantage :

La pièce est injectée classiquement selon la technologie PIM conventionnelle : le granulé est chauffé dans la vis d'injection puis injecté en matrice. La pièce est alors refroidie puis éjectée.

Le déliantage est effectué dans l'eau. L'intégralité du PEG est éliminée par dissolution dans l'eau (4h dans un bain thermostaté agité à 80°C). Le PE résiduel permet de lier les fibres et les poudres, et d'assurer la tenue mécanique de la pièce déliantée. Outre le PE, les fibres d'alumine présentes assurent également le rôle de liant des poudres d'alumine et ainsi l'intégrité de la pièce.

### 1-3.frittage :

L'opération de frittage est précédée par le déliantage thermique (environ 400°C pendant 2 heures), qui permet l'élimination totale du PE. Ensuite, l'ensemble est fritté à 1700°C pendant 1 heure. La structure de la fibre disparaît après frittage.

Dans ce cas de figure, les poudres et les fibres en présence sont constituées du même matériau, en l'occurrence de l'alumine. Il y a donc disparition des fibres, et obtention d'un composant constitué d'une seule nature de matériau.

### 2/ Exemple 2 : Réalisation d'un alliage de FeNi de composition variable

Dans ce mode de réalisation, le composant final peut être fabriqué dans toute une série d'alliages différents, tout en utilisant la même source de poudre de fer et de nickel (Fe-Ni). A titre d'exemple, on réalise des composants en Fe-36%Ni (connu sous le nom de Invar), en partant de poudres de Fe-8%Ni. Les poudres Fe-8%Ni contiennent 8% massique de Ni pour 92% de Fe, alors que les composants Fe-36%Ni contiennent 36% en masse de Ni pour 64%% de Fe.

En pratique, il s'agit d'incorporer dans la formulation du feedstock, de la poudre micronique de FeNi, ainsi que des fibres microniques de Ni, en quantité exacte et suffisante pour permettre de respecter la composition du FeNi souhaitée pour les composants finaux.

Une formulation comprend en masse:
- PEG : 70% ;
- PE : 6% ;
- poudre de Fe8%Ni : 16 % ;
- fibres de Ni : 7%.
- AS : 1%

La mise en oeuvre du procédé selon l'invention, telle que décrite dans l'exemple 1, permet de réaliser des composants en Fe-Ni36% après frittage, dont la température de frittage est classiquement de 1250°C.

Dans ce cas de figure, les poudres (Fe-Ni) et les fibres (Ni) en présence ne sont pas constituées du même matériau. Il y a donc dissociation des fibres et obtention d'un alliage, en l'occurrence modification de l'alliage constitutif des poudres avec un enrichissement en nickel.

## Revendications

1. Mélange-maître pour PIM comprenant :
- une poudre métallique ou céramique ;
- un liant polymérique;
- des fibres ou nanofibres métalliques ou céramiques, les fibres ou nanofibres étant métalliques lorsque la poudre est métallique, et les fibres ou nanofibres étant céramiques lorsque la poudre est céramique.

2. Mélange-maître selon la revendication 1, ***caractérisé* en ce que** les fibres ou nanofibres sont réalisées à l'aide d'un matériau entrant dans la composition de la poudre.

3. Mélange-maître selon la revendication 2, ***caractérisé* en ce que** la poudre et les fibres ou nanofibres sont réalisées à l'aide du même matériau, avantageusement une céramique, par exemple de l'alumine.

4. Mélange-maître selon la revendication 2, ***caractérisé* en ce que** le mélange-maître comprend un mélange de poudres, avantageusement métalliques, et **en ce que** les fibres ou nanofibres sont réalisées à l'aide du même matériau que l'une des poudres du mélange.

5. Mélange-maître selon la revendication 2, ***caractérisé* en ce que** la poudre est constituée d'un mélange de matériaux, avantageusement un alliage métallique, et **en ce que** les fibres ou nanofibres sont réalisées à l'aide d'un des matériaux constitutifs de la poudre.

6. Mélange-maître selon l'une des revendications 1 à 5, ***caractérisé* en ce que** le liant polymérique est constitué d'un ou des polymères d'addition assurant les fonctions de plastifiant, de lubrifiant et/ou de surfactant.

7. Mélange-maître selon la revendication 6, ***caractérisé* en ce que** le liant polymérique est constitué de polyéthylène glycol (PEG) et de polyéthylène (PE).

8. Procédé de fabrication d'un mélange-maître tel que défini à l'une des revendications 1 à 7, comprenant les étapes suivantes :
- préparation du liant polymérique par incorporation et mélange, avantageusement dans un malaxeur et sous chauffage, du ou des polymères constitutifs du liant ;
- incorporation des fibres ou nanofibres inorganiques ;
- incorporation de la ou des poudres inorganiques.

9. Procédé de fabrication d'un mélange-maître tel que défini à l'une des revendications 1 à 7, comprenant les étapes suivantes :
- préparation du liant polymérique par incorporation et mélange, avantageusement dans un malaxeur et sous chauffage, du ou des polymères constitutifs du liant ;
- incorporation de la ou des poudres inorganiques;
- incorporation des fibres ou nanofibres inorganiques.

10. Procédé de fabrication d'un mélange-maître selon la revendication 8 ou 9, ***caractérisé* en ce que** le taux de charge volumique en poudres et en fibres ou nanofibres est compris entre 50 % à 80 %.

11. Procédé de fabrication de pièces par la technique de moulage par injection (PIM) comprenant les étapes suivantes :
- préparation d'un mélange-maître tel que défini à l'une des revendications 1 à 7 ;
- injection du mélange-maître dans le moule ;
- déliantage, avantageusement chimique, thermique et/ou à l'aide d'un fluide supercritique tel que le CO₂ supercritique ;
- frittage dans des conditions permettant la déstructuration des fibres ou nanofibres.

12. Procédé de fabrication de pièces selon la revendication 11, ***caractérisé* en ce que** le frittage est réalisé à une température de l'ordre de 0,7 fois la température de fusion du matériau constitutif des fibres ou nanofibres.

13. Procédé de fabrication de pièces selon la revendication 11 ou 12, ***caractérisé* en ce que** les fibres ou nanofibres sont orientées pendant l'étape d'injection.

14. Pièce obtenue à l'aide du procédé de fabrication selon l'une des revendications 11 à 13.

15. Pièce selon la revendication 14 ***caractérisé* en ce qu'**il s'agit d'une pièce de grosse taille, avantageusement d'un volume supérieur à 100 cm³, voire supérieur à 1 l.

## Patentansprüche

1. Masterbatch zum Pulverspritzgiessen, umfassend:
- ein metallisches oder keramisches Pulver;
- ein polymeres Bindemittel;
- metallische oder keramische Fasern oder Nanofasern, wobei die Fasern oder Nanofasern metallisch sind, wenn das Pulver metallisch ist, und die Fasern oder Nanofasern keramisch sind, wenn das Pulver keramisch ist.

2. Masterbatch nach Anspruch 1, **dadurch gekennzeichnet, dass** die Fasern oder Nanofasern mithilfe eines Materials hergestellt werden, das in der Zusammensetzung des Pulvers enthalten ist.

3. Masterbatch nach Anspruch 2, **dadurch gekennzeichnet, dass** das Pulver und die Fasern oder Nanofasern mithilfe des gleichen Materials, vorteilhafterweise einer Keramik, zum Beispiel Aluminiumoxid, hergestellt werden.

4. Masterbatch nach Anspruch 2, **dadurch gekennzeichnet, dass** das Masterbatch ein Gemisch aus Pulvern, vorteilhafterweise aus metallischen Pulvern, umfasst und dadurch, dass die Fasern oder Nanofasern mithilfe des gleichen Materials wie eines der Pulver des Gemischs hergestellt werden.

5. Masterbatch nach Anspruch 2, **dadurch gekennzeichnet, dass** das Pulver aus einem Gemisch von Materialien, vorteilhafterweise einer Metalllegierung, besteht, und dadurch, dass die Fasern oder Nanofasern mithilfe eines der Materialien, aus dem das Pulver besteht, hergestellt werden.

6. Masterbatch nach einem der Ansprüche 1 bis 5, **dadurch gekennzeichnet, dass** das polymere Bindemittel aus einem oder mehreren Additionspolymeren besteht, die die Funktionen eines Weichmachers, Gleitmittels und/oder einer grenzflächenaktiven Substanz gewährleisten.

7. Masterbatch nach Anspruch 6, **dadurch gekennzeichnet, dass** das polymere Bindemittel aus Polyethylenglycol (PEG) und Polyethylen (PE) besteht.

8. Verfahren zur Herstellung eines Masterbatch wie in einem der Ansprüche 1 bis 7 definiert, umfassend die folgenden Schritte:
- Herstellen des polymeren Bindemittels durch Beigeben und Mischen, vorteilhafterweise in einem Kneter und unter Erwärmen, des oder der Polymere, aus denen das Bindemittel besteht;
- Beigeben der anorganischen Fasern oder Nanofasern;
- Beigeben des oder der anorganischen Pulver.

9. Verfahren zur Herstellung eines Masterbatch wie in einem der Ansprüche 1 bis 7 definiert, umfassend die folgenden Schritte:
- Herstellen des polymeren Bindemittels durch Beigeben und Mischen, vorteilhafterweise in einem Kneter und unter Erwärmen, des oder der Polymere, aus denen das Bindemittel besteht;
- Beigeben des oder der anorganischen Pulver;
- Beigeben der anorganischen Fasern oder Nanofasern.

10. Verfahren zur Herstellung eines Masterbatch nach Anspruch 8 oder 9, **dadurch gekennzeichnet, dass** der Füllstoffvolumenanteil an Pulvern und an Fasern oder Nanofasern im Bereich zwischen 50 % und 80 % liegt.

11. Verfahren zur Herstellung von Teilen mittels Pulverspritzgusstechnik, umfassend die folgenden Schritte:
- Herstellen eines Masterbatches wie in einem der Ansprüche 1 bis 7 definiert;
- Einspritzen des Masterbatches in die Form;
- Entbindern, vorteilhafterweise chemisch, thermisch und/oder mithilfe eines superkritischen Fluids, wie etwa superkritischem CO₂;
- Sintern unter Bedingungen, die die Destrukturierung der Fasern oder Nanofasern ermöglichen.

12. Verfahren zur Herstellung von Teilen nach Anspruch 11, **dadurch gekennzeichnet, dass** das Sintern bei einer Temperatur in der Größenordnung von 0,7 Mal der Schmelztemperatur des Materials, aus dem die Fasern oder Nanofasern bestehen, durchgeführt wird.

13. Verfahren zur Herstellung von Teilen nach Anspruch 11 oder 12, **dadurch gekennzeichnet, dass** die Fasern oder Nanofasern während des Schritts zum Einspritzen orientiert werden.

14. Teil, erhalten mithilfe des Verfahrens zur Herstellung nach einem der Ansprüche 11 bis 13.

15. Teil nach Anspruch 14, **dadurch gekennzeichnet, dass** es sich um ein Teil von großer Größe, vorteilhafterweise mit einem Volumen größer als 100 cm³, sogar größer als 1 l handelt.

## Claims

1. A feedstock for power injection molding, comprising:
- a metal or ceramic powder;
- a polymeric binder;
- metallic or ceramic fibres or nanofibres, the fibres or nanofibres being metallic when the powder is metallic, and the fibres or nanofibres being ceramic when the powder is ceramic.

2. The feedstock of claim 1, **characterized in that** the fibres or nanofibres are formed by means of a material taking part in the composition of the powder.

3. The feedstock of claim 2, **characterized in that** the powder and the fibres or nanofibres are formed by means of the same material, advantageously a ceramic, for example, alumina.

4. The feedstock of claim 2, **characterized in that** the feedstock comprises a mixture of powders, advantageously metallic, and **in that** the fibres or nanofibres are formed by means of the same material as that forming one of the powders of the mixture.

5. The feedstock of claim 2, **characterized in that** the powder is formed of a mixture of materials, advantageously a metallic alloy, and **in that** the fibres or nanofibres are formed by means of one of the materials forming the powder.

6. The feedstock of any of claims 1 to 5, **characterized in that** the polymeric binder is formed of one or more addition polymers behaving as a plasticizer, lubricant, and/or surfactant.

7. The feedstock of claim 6, **characterized in that** the polymeric binder is formed of polyethylene glycol (PEG) and of polyethylene (PE).

8. A method for manufacturing the feedstock of any of claims 1 to 7, comprising the steps of:
- preparing the polymeric binder by incorporation and mixture, advantageously in a kneader and under heating, of the polymer(s) forming the binder;
- incorporating the inorganic fibres or nanofibres;
- incorporating the inorganic powder(s).

9. A method for manufacturing the feedstock of any of claims 1 to 7, comprising the steps of:
- preparing the polymeric binder by incorporation and mixture, advantageously in a kneader and under heating, of the polymer(s) forming the binder;
- incorporating the inorganic powder(s);
- incorporating the inorganic fibres or nanofibres.

10. The feedstock manufacturing method of claim 8 or 9, **characterized in that** the volume filler content of powders and fibres or nanofibres ranges between 50% and 80%.

11. A method for manufacturing parts by the power injection molding technique (PIM), comprising the steps of:
- preparing the feedstock of any of claims 1 to 7;
- injecting the feedstock into the mould;
- debinding, advantageously, chemically, thermally, and/or by means of a supercritical fluid such as supercritical CO₂;
- sintering in conditions enabling to destructure the fibres or nanofibres.

12. The method for manufacturing parts of claim 11, **characterized in that** the sintering is performed at a temperature on the order of 0.7 times the melting temperature of the material forming the fibres or nanofibres.

13. The method for manufacturing parts of claim 11 or 12, **characterized in that** the fibres or nanofibres are given a direction during the injection step.

14. A part obtained by means of the manufacturing method of any of claims 11 to 13.

15. The part of claim 14 **characterized in that** it is a part of large bulk, advantageously having a volume greater than 100 cm³, or even greater than 1 l.
